# FASCICULE DE BREVET EUROPEEN

(11) **EP 0 343 046 B1**
(45) Date de publication et mention de la délivrance du brevet: **07.01.1993**
(21) Numéro de dépôt: 89401315.0
(22) Date de dépôt: 11.05.1989
(51) Int. Cl.: B60R 13/06, E06B 7/23

(54) **Joint d'entancheite, notamment pour glace mobile de vehicule automobile**
Abdichtung, insbesondere für eine verschiebbare Fensterscheibe eines Kraftfahrzeuges
Sealing joint, particularly for a moving window of a motor vehicle

(30) Priorité: 16.05.1988 FR 8806520
(43) Date de publication de la demande: 23.11.1989
(73) Titulaire: HUTCHINSON, F-75008 Paris (FR)
(72) Inventeur: Guillon, Henri, F-78740 Vaux-Sur-Siene (FR)
(74) Mandataire: Brycman, Jean

(56) Documents cités:
- EP-A- 0 191 381
- FR-A- 2 517 011
- FR-A- 2 588 035
- US-A- 4 442 156

## Description

L'invention a pour objet un joint d'étanchéité, notamment pour glace mobile de véhicule automobile.

On connaît déjà, dans de nombreuses réalisations, des joints d'étanchéité pour vitre ou glace d'automobile, montés fixes sur le cadre ou châssis de la porte du véhicule qu'ils équipent et désignés sous le nom de "coulisses de glace" lorsqu'ils forment l'enca-drement supérieur et latéral de la baie propre à être ouverte ou fermée par ladite glace mobile, tandis qu'ils sont désignés sous le nom de "profils d'étanchéité de bas de glace", ou de "lécheurs" lorsqu'ils sont prévus sur le bord inférieur de ladite baie. Si les lécheurs, de même que les coulisses, sont destinés à procurer l'étanchéité requise à l'eau, d'une part, et contribuer à l'isolation phonique, d'autre part, ils n'en ont pas moins des fonctions différentes, les coulisses ayant un rôle de guidage et de protection qui n'est pas requis des lécheurs dont on attend, par contre, qu'ils contribuent à l'aspect esthétique du véhicule.

On a déjà proposé, pour permettre aux coulisses ou aux lécheurs d'assurer leur fonction, de les munir d'une lèvre d'étanchéité, en caoutchouc naturel ou synthétique, portée par un talon comportant éventuellement une armature, la lèvre s'appliquant en se déformant contre la surface mobile avec laquelle elle est propre à coopérer.

Toutefois, comme l'application d'une telle lèvre contre une vitre ou glace d'automobile a tendance à freiner le coulissement de celle-ci, il a été proposé de recouvrir la surface de la lèvre qui est en contact avec la vitre d'une couche de polyoléfine, de polytétrafluoroéthylène ou d'un autre matériau possédant de bonnes propriétés de glissement. Voir par exemple US-A-4 442 156 ou EP-A-0 191 381 dans lequel est décrit un joint d'étanchéité pour surface mobile selon le préambule de la revendication 1. Les résultats obtenus ne sont cependant pas entièrement satisfaisants, soit sur le plan de l'étanchéité lorsque le revêtement déposé est assez épais pour ne pas être totalement éliminé au cours de la vie du véhicule, soit sur le plan de l'usure du revêtement, lorsque celui-ci a été réalisé sous une épaisseur suffisamment mince pour que le joint remplisse correctement sa fonction d'étanchéité.

C'est, par conséquent, un but de l'invention de fournir un joint d'étanchéité, notamment pour glace mobile de véhicule automobile qui, tout en assurant une bonne étanchéité à l'eau et une bonne isolation phonique, n'oppose pas de résistance au déplacement de la vitre et puisse en conditions normales d'utilisation, rester à demeure toute la durée de vie du véhicule qu'il équipe.

C'est, aussi, un but de l'invention de fournir un tel joint d'étanchéité dont la fabrication n'exige pas d'opérations de finitions particulières et qui, de ce fait, est de réalisation simple et économique.

A cet effet, un joint d'étanchéité pour surface mobile suivant l'invention est caractérisé en ce que la lèvre ou organe profilé présente des échancrures qui règnent en regard desdites bandes, à la fois sur la couche en matériau favorisant le glissement et à l'intérieur de ladite lèvre ou organe profilé à partir de la surface de la lèvre ou organe profilé qui est la plus proche de la surface mobile.

Suivant un mode de réalisation de l'invention, plus particulièrement adaptée à un joint utilisé comme profil d'étanchéité pour glace mobile d'automobile et comportant un pied ou corps de fixation sur la baie de la vitre ou glace, on prévoit qu'une partie de la lèvre ou organe profilé non revêtue de ladite couche discontinue est solidaire dudit pied ou corps ou confondue avec une partie de celui-ci et est constituée d'un matériau de dureté et/ou rigidité égale ou différente de celle du matériau portant ladite couche discontinue.

Suivant un autre mode de réalisation de l'invention, qui trouve plus particulièrement application dans le cas d'un organe profilé tubulaire, la surface intérieure de l'organe profilé présente une échancrure sensiblement en face d'une zone de ladite couche.

Suivant une autre caractéristique, combinée avec la précédente, ladite échancrure de la surface intérieure de l'organe profilé est située sensiblement en face du milieu de ladite couche.

Suivant une autre caractéristique, éventuellement combinée avec les précédentes, l'une au moins des extrémités de l'organe profilé comporte une échancrure sur sa surface extérieure.

Suivant une autre caractéristique, combinée avec la précédente, l'une au moins desdites extrémités comporte un renflement sur sa surface intérieure.

Suivant encore une autre caractéristique combinée avec la précédente, le profil de ladite échancrure de l'extrémité de l'organe profilé est parallèle à celui dudit renflement de manière à ce que l'épaisseur de l'organe profilé ne soit pas diminuée au niveau de l'échancrure.

Dans une réalisation de joint d'étanchéité selon l'invention destiné à former une coulisse pour glace mobile de véhicule automobile, le corps de fixation sur la baie de la glace est extrudé en un matériau élastomère de plus grande dureté que celui qui est coextrudé avec lui et avec le matériau ayant de bonnes propriétés de glissement pour former au moins la ou les lèvre(s) ou l'organe profilé d'étanchéité du joint.

La couche discontinue est avantageusement réalisée en polytétrafluoroéthylène ou en polyoléfine soit par coextrusion avec l'ensemble du joint, soit par trempage ou pulvérisation avec masquage ou prétraitement des zones ne devant pas être recouvertes.

On obtient ainsi directement et sans qu'il soit nécessaire de prévoir des opérations de finitions, une coulisse calibrée de positionnement simple et sûr dans le châssis de la porte qu'elle est destinée à équiper.

D'autres caractéristiques et avantages de l'invention apparaîtront de la description qui suit, faite à titre d'exemple et en référence au dessin annexé dans lequel :
- la figure 1 est une vue partielle illustrant une partie de carrosserie d'automobile ;
- la figure 2 est une vue en coupe transversale d'une première forme de réalisation d'un joint suivant l'invention en l'absence de vitre ;
- la figure 3 est une vue en coupe transversale du même joint monté sur la baie, la vitre étant en place ;
- la figure 4 est une vue en coupe transversale schématique d'une autre forme de réalisation d'un joint selon l'invention destiné à former une coulisse de glace mobile de véhicule automobile.

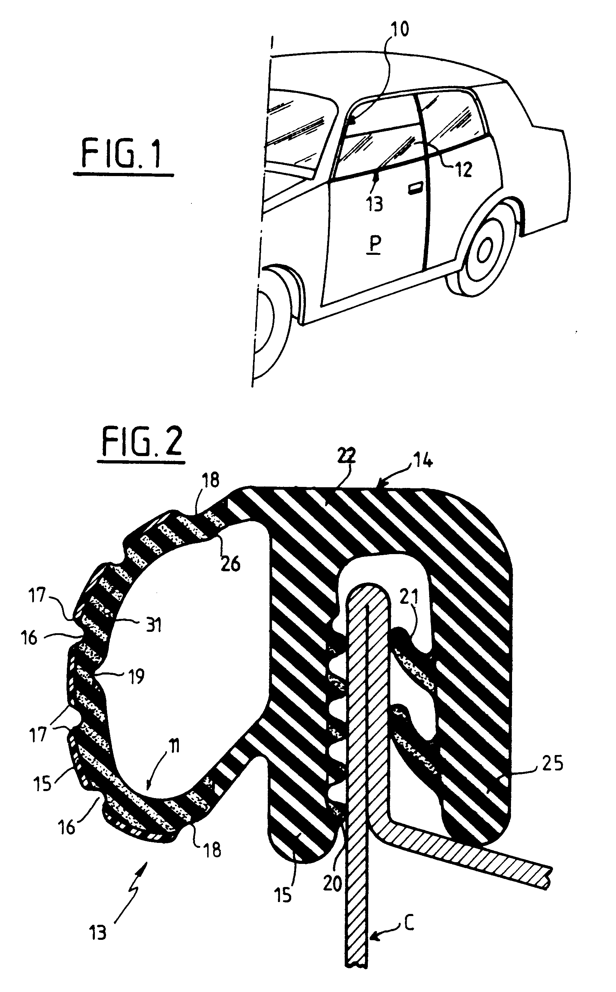

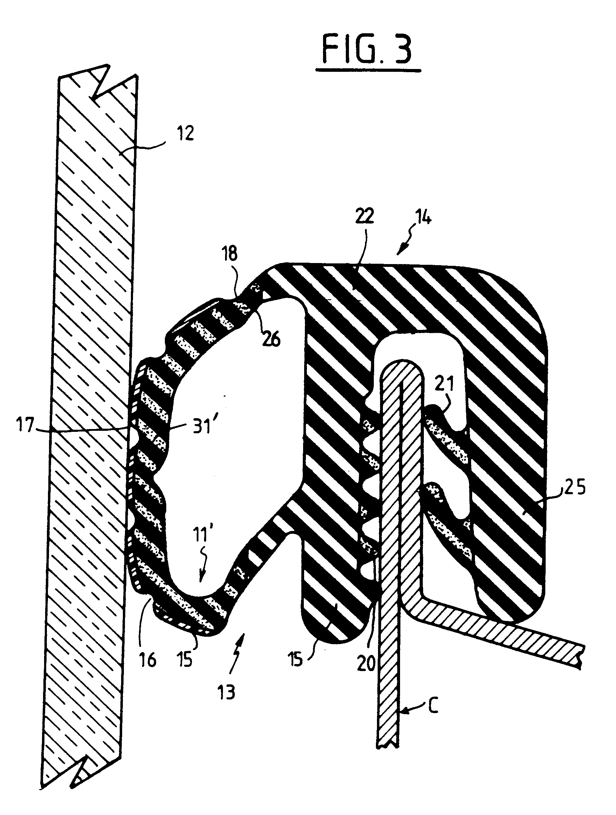

On se réfère d'abord aux figures 1 à 3 où sur les deux figures 2 et 3 les mêmes références désignent les mêmes éléments, l'indice "prime" se rapportant aux éléments déformés par la présence de la vitre.

Un joint désigné dans son ensemble par la référence 13 est ici prévu à la partie inférieure de la baie 10 d'une portière P d'automobile, propre à être fermée par une vitre ou glace coulissante 12, figure 1, ladite vitre ou glace étant guidée latéralement par des coulisses de glace, non représentées, et étant propre à coopérer avec une coulisse supérieure s'étendant sensiblement parallèlement au lécheur 13. Ce dernier comprend essentiellement un organe profilé ou lèvre tubulaire 11, 11′ de section droite générale sensiblement elliptique, dont une partie est solidaire d'un talon 14, à section droite générale en π, figure 2, à ailes 15 et 25 sensiblement parallèles réunies par une âme 22, les ailes 15 et 25 présentant sur leurs faces en regard, respectivement, des saillies ou nervures comme 20 et 21 de fixation sur le cadre ou châssis C de la porte P. Le talon 14 peut être armé par un profilé en U, avantageusement métallique, par exemple en aluminium, qui est noyé dans la masse du matériau constitutif du profil, ledit matériau pouvant être un matériau élastomère, comme un caoutchouc, ou un matériau plastomère comme du PVC.

L'invention envisage également dans son cadre de réaliser le profil non pas en un seul matériau, mais en des matériaux différant entre eux par certaines de leurs propriétés, par exemple leur dureté, le corps du talon 14 étant alors de préférence réalisé en un matériau de plus grande dureté que les saillies ou nervures 20, 21 et que la partie active 31, 31′ de l'organe profilé en contact avec la vitre, laquelle partie active est réalisée dans un matériau élastique suffisamment souple pour accommoder les éventuels défauts de planéité de la vitre.

Selon l'invention, une couche discontinue 15 d'un matériau possédant de bonnes propriétés de glissement comme du polytétrafluoroéthylène est déposée sur la partie active de l'organe profilé sous forme de bandes s'étendant longitudinalement sur toute la longueur du joint, les bandes étant séparées les unes des autres.

Entre les différentes bandes formant la couche discontinue 15 la surface extérieure de l'organe profilé qui est la plus proche de la vitre comporte avantageusement des dépressions ou échancrures 16 favorisant la déformation de la partie active du joint nécessaire à l'étanchéité et de surcroît jouant un rôle de sas d'emmagasinage des poussières, évitant que celles-ci ne rayent la vitre au cours de son déplacement. Les bords latéraux, tels que 17, des bandes de la couche 15 ont avantageusement un effet d'arrachement des matières, moins dures que la vitre, accumulées et adhérant sur celle-ci, le givre par exemple.

La surface externe de la partie active 31 au voisinage de son raccordement au corps 14 est légèrement échancrée en 18 ce qui, augmentant sa souplesse, améliore encore son adaptation à d'éventuelles irrégularités de la surface de la vitre.

Cette adaptation est améliorée aussi par l'échancrure 19 ménagée sur sa surface intérieure sensiblement en face du milieu de la bande centrale de la couche 15. D'autres échancrures peuvent être prévues en face des autres bandes ou éléments de la couche 15 suivant le degré de souplesse recherché et la nature du matériau constituant la partie 31. Un renflement 26 sur la surface interne de la partie active 31 en face de l'échancrure supérieure du joint augmente la résistance du raccordement de la partie active 31 au pied 14 dans la mesure nécessaire pour résister à l'effort exercé par la vitre lors de sa descente, tandis que la continuité du profil intérieur au bas de l'organe profilé d'étanchéité assure un meilleur effet d'amortissement de la vitre relevée. La face intérieure de l'organe profilé d'étanchéité, du côté du pied, n'est pas nécessairement plane mais le mode de réalisation illustré présente l'avantage d'être plus simple à fabriquer.

Les différentes échancrures sont avantageusement réalisées au cours de l'extrusion, coextrusion ou moulage si l'une de ces techniques est employée pour la fabrication de l'ensemble du joint, mais elles peuvent aussi être exécutées après la fabrication de celui-ci.

Le fractionnement de la couche 15 peut évidemment être différent de celui illustré, tant par le nombre de zones ou bandes revêtues que par leur largeur.

Des polyoléfines, du polytétrafluoroéthylène et autres matériaux connus pour leurs bonnes qualités de glissant et de résistance à l'usure sont avantageusement employés pour la réalisation de la couche 15, mise en place par exemple par coextrusion avec le ou les matériaux constituant les autres parties du joint, ou par moulage. Elle peut bien entendu être rapportée par tout autre procédé approprié tel que par trempage, pulvérisation, etc... avec par exemple masquages ou prétraitement anti-adhérent des zones de la surface ne devant pas être revêtues, sans sortir du cadre de l'invention.

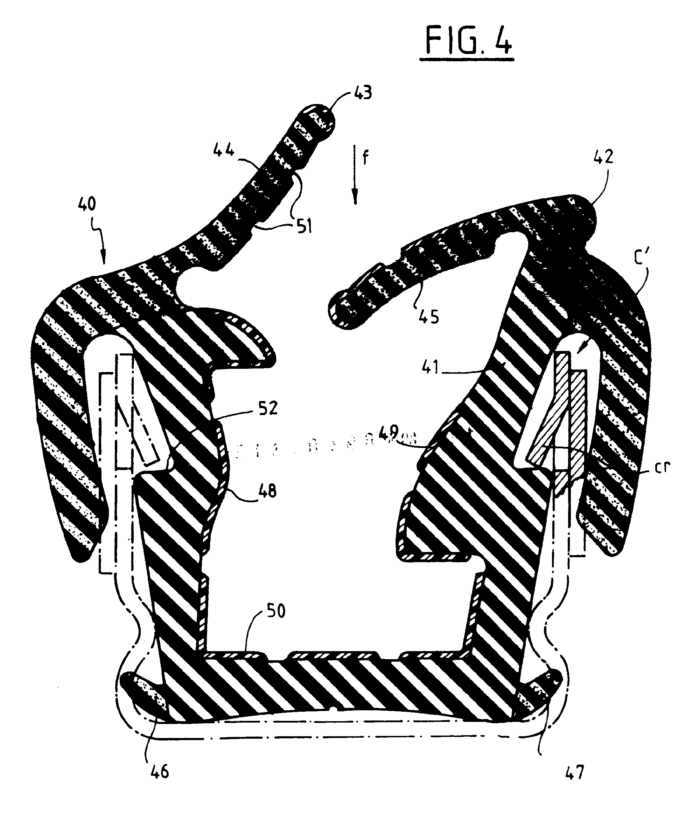

On se réfère maintenant à la figure 4 illustrant schématiquement une réalisation de joint d'étanchéité selon l'invention en tant que coulisse pour glace mobile de véhicule automobile. Dans cette forme de réalisation, le joint 40 est fabriqué par coextrusion d'un corps en matériau relativement dur montré en 41, d'un matériau de plus faible dureté comme montré en 42 et de la couche discontinue 43 du matériau à bonnes propriétés de glissement, les échancrures de ladite couche favorisant la déformation des parties actives du joint étant montrées en 51. De façon plus précise, le corps 41 à section droite générale en U est en un matériau élastomère d'une dureté qui peut être, par exemple, de 50 Shore D, tandis que le matériau 42 constitutif des lèvres d'étanchéité 44 et 45 est en un élastomère à 70 Shore A, ce même matériau étant celui constitutif des saillies 46 et 47 s'étendant de part et d'autre de la base du corps en U, 41.

Dans cette forme de réalisation, le matériau 43 à bonnes propriétés de glissement, et qui peut être l'un de ceux indiqués ci-dessus en référence à la réalisation des figures 2 et 3, est également rapporté sur certaines parties des ailes du corps comme montré en 48 et 49 ainsi que sur le fond du corps comme montré en 50.

Pour la mise en place de la coulisse sur le cadre ou châssis C′ de la portière ladite coulisse 40 est simplement enfoncée dans le sens de la flèche f : le corps 41, quoique rigide, est suffisamment déformable pour passer les crevés cr puis reprendre ensuite la forme et la position montrées sur le dessin en laquelle lesdits crevés coopérant avec des épaulements 52 des ailes du corps s'opposent à son extraction intempestive.

Au bon positionnement de la coulisse contribuent les saillies 46 et 47 plus facilement déformables, car en un matériau de plus faible rigidité que celui du corps, lesdites saillies étant déformées, à partir de leur condition montrée sur le dessin et qui est celle préalable à l'introduction de la coulisse dans le châssis C′.

## Revendications

1. Joint d'étanchéité pour surface mobile (12) comprenant au moins une lèvre ou organe profilé (11, 44, 45) destiné à venir en contact avec la surface mobile et qui est en partie garni d'un matériau favorisant le glissement disposé au moins sur la partie active de ladite lèvre ou organe profilé (11, 44, 45) suivant une couche discontinue (15, 43) définissant une pluralité de zones s'étendant longitudinalement sur toute la longueur du joint et qui sont séparées les unes des autres par des bandes démunies dudit matériau, caractérisé en ce que la lèvre ou organe profilé (11, 44, 45) présente des échancrures (16, 51) qui règnent en regard desdites bandes, à la fois sur la couche (15, 43) en matériau favorisant le glissement et à l'intérieur de ladite lèvre ou organe profilé (11, 44, 45) à partir de la surface de la lèvre ou organe profilé (11, 44, 45) qui est la plus proche de la surface mobile (12).

2. Joint suivant la revendication 1, notamment pour glace mobile de véhicule automobile, comportant un pied ou corps de fixation (14, 41) sur la baie de la vitre ou glace, caractérisé en ce qu'une partie de la lèvre ou organe profilé (11, 44, 45), non revêtue de ladite couche discontinue (15, 43), est solidaire dudit pied ou corps ou confondue avec une partie de celui-ci, et est constituée d'un matériau de dureté et/ou rigidité égale ou différente de celle du matériau portant ladite couche discontinue.

3. Joint suivant l'une quelconque des revendications précédentes, caractérisé en ce que l'organe profilé (11) est tubulaire et présente sur sa surface intérieure une échancrure (19) sensiblement en face d'une zone de ladite couche (15).

4. Joint suivant la revendication 3, caractérisé en ce que ladite échancrure (19) de la surface intérieure est située sensiblement en face du milieu de ladite couche (15).

5. Joint suivant la revendication 4, caractérisé en ce que l'une au moins des extrémités de l'organe profilé (11) comporte une échancrure (18) sur sa surface extérieure.

6. Joint suivant la revendication 5, caractérisé en ce que l'une au moins desdites extrémités comporte un renflement (26) sur sa surface intérieure.

7. Joint suivant la revendication 6, caractérisé en ce que le profil de ladite échancrure de l'extrémité est parallèle à celui dudit renflement.

8. Joint suivant l'une quelconque des revendications 2 à 7, comportant plusieurs griffes (20, 21) de fixation au châssis (C) de la surface mobile (12), caractérisé en ce que lesdites griffes (20, 21) sont constituées d'un matériau de rigidité et/ou dureté différente de celle du reste du pied (14), éventuellement de même rigidité et/ou dureté que la partie du joint revêtue de ladite couche (15).

9. Joint suivant l'une quelconque des revendications 1 et 2, destiné notamment à former une coulisse pour glace mobile de véhicule automobile, caractérisé en ce que le corps de fixation (41) sur la baie de la glace est extrudé en un matériau élastomère de plus grande dureté que celui qui est coextrudé avec lui et avec le matériau ayant de bonnes propriétés de glissement pour former au moins la ou les lèvre(s) (44, 45) ou l'organe profilé d'étanchéité du joint.

10. Joint suivant l'une quelconque des revendications 1 à 9, caractérisé en ce que ladite couche discontinue (15, 43) est réalisée en polytétrafluoroéthylène ou en polyoléfine.

11. Joint suivant l'une quelconque des revendications 1 à 10, caractérisé en ce que ladite couche discontinue (15, 43) est réalisée par coextrusion avec l'ensemble du joint.

12. Joint suivant l'une quelconque des revendications 1 à 10, caractérisé en ce que ladite couche discontinue (15, 43) est réalisée par trempage ou pulvérisation avec masquage ou prétraitement des zones ne devant pas être recouvertes.

## Patentansprüche

1. Dichtung für eine bewegliche Oberfläche (12), mit mindestens einer Lippe oder einem profilierten Organ (11, 44, 45), das dazu bestimmt ist, in Berührung mit der beweglichen Oberfläche zu gelangen und das teilweise mit einem Material versehen ist, das die Gleitbewegung fördert und mindestens auf dem wirksamen beschnitt der genannten Lippe oder des profilierten Organs (11, 44, 45) als diskontinuierlicher Überzug (15, 43) angeordnet ist, der eine Vielzahl von Zonen bildet, die sich in Längsrichtung über die Länge der Dichtung erstrecken und die voneinander durch Streifen getrennt sind, auf denen das genannte Material nicht vorliegt, dadurch **gekennzeichnet**, daß die Lippe oder das profilierte Organ (11, 44, 45) Auskehlungen (16, 51) aufweist, die dem genannten Streifen zugewandt gleichzeitig auf dem Überzug (15, 43) aus einem die Gleitbewegung fördernden Material und im Inneren der genannten Lippe oder des profilierten Organs (11, 44, 45) vorliegen, von jener Oberfläche der Lippe oder des profilierten Organs (11, 44, 45) ausgehend, das der beweglichen Oberfläche (12) nächstgelegen ist.

2. Dichtung nach Anspruch 1, insbesondere für eine bewegliche Kraftfahrzeug-Glasscheibe, mit einem Befestigungsfuß oder -körper (14, 41) auf der Öffnung der Fenster- oder Glasscheibe, dadurch **gekennzeichnet**, daß ein Teil der Lippe oder des profilierten Organs (11, 44, 45), der mit dem genannten diskontinuierlichen Überzug (15, 43) nicht verkleidet ist, mit dem genannten Fuß oder Körper einstückig ausgebildet oder mit einem Abschnitt dessen gemeinsam geformt ist und aus einem Material mit einer Härte und/oder Starrheit gebildet ist, die gleich oder nicht gleich ist jener des Materials, das den genannten diskontinuierlichen Überzug trägt.

3. Dichtung nach irgendeinem der vorausgehenden Ansprüche, dadurch **gekennzeichnet**, daß das profilierte Organ (11) rohrförmig ist und auf seiner Innenfläche eine Auskehlung (19) aufweist, die im wesentlichen der Zone des genannten Überzugs (15) gegenüberliegt.

4. Dichtung nach Anspruch 3, dadurch **gekennzeichnet**, daß die genannte Auskehlung (19) der Innenfläche im wesentlichen der Mitte des genannten Überzugs (15) gegenüberliegend gelegen ist.

5. Dichtung nach Anspruch 4, dadurch **gekennzeichnet**, daß mindestens eines der Enden des profilierten Organs (11) auf ihrer Außenfläche eine Auskehlung (18) aufweist.

6. Dichtung nach Anspruch 5, dadurch **gekennzeichnet**, daß mindestens eines der Enden eine Verstärkung (26) auf ihrer Innenfläche aufweist.

7. Dichtung nach Anspruch 6, dadurch **gekennzeichnet**, daß das Profil der genannten Endauskehlung parallel zu jenem der Verstärkung verläuft.

8. Dichtung nach irgendeinem der Ansprüche 2 bis 7, mit mehreren Klauen (20, 21) zur Befestigung der beweglichen Oberfläche (12) am Rahmen (C), dadurch **gekennzeichnet**, daß die genannten Klauen (20, 21) aus einem Material mit einer Starrheit und/oder Härte gebildet sind, die sich von jener des Restes des Fußes (14) unterscheidet, gegebenenfalls mit derselben Starrheit und/oder Härte wie der Teil der Dichtung, der mit dem genannten Überzug (15) verkleidet ist.

9. Dichtung nach irgendeinem der Ansprüche 1 und 2, insbesondere bestimmt zur Bildung einer Gleitführung für eine bewegliche Kraftfahrzeug-Glasscheibe, dadurch **gekennzeichnet**, daß der Körper (41) zu Befestigung auf der Öffnung für die Glasscheibe aus einem Elastomermaterial mit einer größeren Härte als jenes extrudiert ist, das mit diesem und mit jenem Material coextrudiert ist, das gute Gleiteigenschaften aufweist, um mindestens die Lippe bzw. Lippen (44, 45) oder das profilierte Organ der Dichtung zu bilden.

10. Dichtung nach irgendeinem der Ansprüche 1 bis 9, dadurch **gekennzeichnet**, daß der genannte diskontinuierliche Überzug (15, 43) aus Polytetrafluorethylen oder aus einem Polyolefin gebildet ist.

11. Dichtung nach irgendeinem der Ansprüche 1 bis 10, dadurch **gekennzeichnet**, daß der genannte diskontinuierliche Überzug (15, 43) durch Coextrusion mit der Dichtungsanordnung hergestellt ist.

12. Dichtung nach irgendeinem der Ansprüche 1 bis 10, dadurch **gekennzeichnet**, daß der genannte diskontinuierliche Überzug (15, 43) durch Tauchen oder Aufstäuben mit einem Überzugsmaterial oder durch Vorbehandlung jener Zonen hergestellt ist, die nicht verkleidet werden dürfen.

## Claims

1. Sealing joint for a moving surface (12) comprising at least one lip or profiled member (11, 44, 45) intended to come in contact with the moving surface and which is partly furnished.with a material promoting sliding situated at least on the active part of the said lip or profiled member (11, 44, 45) along a discontinuous layer (15, 43) defining a plurality of areas extending longitudinally throughout the length of the joint and which are kept separate from one another by strips which do not have the said material, characterized in that the lip or profiled member (11, 44, 45) has notches (16, 51) situated facing the said strips, both on the layer (15, 43) which promotes sliding movement and inside the said lip or profiled member (11, 44, 45), starting from the surface of the lip or profiled member (11, 44, 45) which is nearest to the moving surface (12).

2. Joint according to claim 1, particularly for a moving window of a motor vehicle, including a foot or body (14, 41) for fixing on the bay of the window pane or glass, characterized in that a part of the lip or profiled member (11, 44, 45), not coated with the said discontinuous layer (15, 43) is integral with the said foot or body or merges with a part thereof, and is formed in a material the hardness and/or the rigidity of which are equal or different from that of the material carrying the said discontinuous layer.

3. Joint according to either of the foregoing claims, characterized in that the profiled member (11) is tubular and has on its inner surface a notch (19) substantially facing an area of the said layer (15).

4. Joint according to claim 3, characterized in that the said notch (19) of the inner surface is situated substantially facing the middle of the said layer (15).

5. Joint according to claim 4, characterized in that at least one of the ends of the profiled member (11) has a notch (18) on its outer surface.

6. Joint according to claim 5, characterized in that one at least of the said ends has a swelling (26) on its inner surface.

7. Joint according to claim 6, characterized in that the profile of the said notch of the end is parallel to that of the said swelling.

8. Joint according to any one of claims 2 to 7, including several claws (20, 21) for fixing to the frame (C) of the moving surface (12), characterized in that the said claws (20, 21) are made in a material of rigidity and/or hardness different from that of the remainder of the foot (14), possibly of the same rigidity and/or hardness as that of the part of the seal which is coated with the said layer (15).

9. Joint according to either claim 1 or 2, intended particularly to form a slideway for a moving window of a motor vehicle, characterized in that the body for fixing (41) on the window bag is extruded in an elastomeric material of greater hardness than that which is co-extruded with it and with the material possessing good properties of sliding to form at least the lip(s) (44, 45) or the sealing profiled member of the joint.

10. Joint according to any one of claims 1 to 9, characterized in that the said discontinuous layer (15, 43) is made in polytetrafluorethylene or polyolefin.

11. Joint according to any one of claims 1 to 10, characterized in that the said discontinuous layer (15, 43) is made by coextrusion with the entirety of the joint.

12. Joint according to any one of claims 1 to 10, characterized in that the said discontinuous layer (15, 43) is made by dipping or spraying with masking, or pre-treatment of the areas not to be covered.
